# EUROPEAN PATENT APPLICATION

(11) **EP 1 568 557 A1**
(43) Date of publication of application: **31.08.2005**
(21) Application number: 05001318.4
(22) Date of filing: 24.01.2005
(51) Int. Cl.: B60R 25/04, G08B 25/10, B60R 25/10

(54) **Method and device for signalling a vehicle theft attempt, tracing also the position thereof**

(30) Priority: 25.02.2004 IT MI20040335
(71) Applicant: TAVOLA S.p.A., 20141 Milano (IT)
(72) Inventor: Re, Gianpaolo, 20121 Milan (IT)
(74) Representative: La Ciura, Salvatore

(57) **Abstract**

This invention proposes a method for signalling vehicle theft attempts, tracing also the position thereof.

In particular, the method according to this invention consists of sensing, by a sensor (3) of known type, of movements, vibrations, variations in temperature or other events occurred inside or outside the vehicle; the emission of a signal controlling the lock of the vehicle and the emission of a signal capable of activating means (8) which will send out an SMS message to a control station; and the tracing by the said control station of the vehicle position using a GSM system.

In this way the owner of the vehicle can be notified, still by an SMS message sent out from the control station or directly from the said means (8) installed on board of the vehicle, both of the theft attempt when it is in progress and of the position of the vehicle.

## Description

This invention proposes a method for signalling vehicle theft attempts, tracing also the position thereof.

In particular, the method according to this invention consists of sensing, by a sensor of known type, of movements, vibrations, variations in temperature or other events occurred inside or outside the vehicle; the emission of a signal controlling the lock of the vehicle and the emission of a signal capable of activating means which will send out an SMS message to a control station; and the tracing by the said control station of the vehicle position using a GSM system.

In this way the owner of the vehicle can be notified, still by an SMS message sent out from the control station or directly from the said means installed on board of the vehicle, both of the theft attempt when it is in progress and of the position of the vehicle.

As everybody knows, the number of thefts of vehicles, either cars, cycles, motorcycles or the like, is very high and the need to produce antitheft devices which, besides deterring thefts, aiding in the recovery of the vehicle after the theft has occurred, is constantly increasing. In fact, a mechanical or electronic antitheft device, the purpose of which is to prevent or deter the theft, is not always successful in preventing the theft. In this regard devices which, in case of burglary attempts, activate a siren, prevent the engine from being stated, or simply deter the theft by locking mechanical parts such as steering-wheel, pedals or wheels, are known.

As a result of the poor security offered by such devices, antitheft devices of known type, utilising the satellite positioning system, useful for the recovery of the vehicle after the said vehicle has been stolen, have come on stream.

Also this system turned out to be perfectible since, at the present time, such devices require a reception system of the satellite signal which must be installed in a particular area of the vehicle, maybe on the outside, well visible in order to receive and transmit the signal to the satellite in the best possible way. It is clear that such requirements of installation of the antenna and the kind of signal at issue (GPS, GPRS) represent a serious limitation of the device; since the antenna must be visible, it can be therefore tampered with and the signal can be easily blacked out.

This invention falls into this sector by proposing a method to promptly report both theft attempts or theft in progress, and the position of the vehicle.

In particular, the said method provides for vibration or movement sensors connected to a GSM unit capable of emitting an alarm signal and sending it, as SMS messages, to one or more preset telephone numbers; a first signal is sent out, for example, immediately to the owner of the vehicle notifying him/her of the theft that is in progress; a second signal can be sent out to a control room which is this way instructed to translate the GSM device coordinates and therefore to trace the position of the vehicle; the latter can, in its turn, send out SMS messages with the coordinates of the position of the vehicles to preset telephone numbers, such as, for example the vehicle owner's or the police telephone number. Such method, providing for the use of the GSM system, i.e. the local network used by the GSM cellular telephones, has not the shortcomings typical of the antitheft devices which utilise the satellite network (e.g. the GPS system). For this reason, the method according to this invention can be carried out by devices which may be installed in any place of the vehicle, without running into reception or transmission difficulties, since they have the same characteristics as the cellular telephones as regards working capacity.

This invention will be now described in detail, by way of example but without any limitation thereto, with reference to the enclosed drawings, wherein:

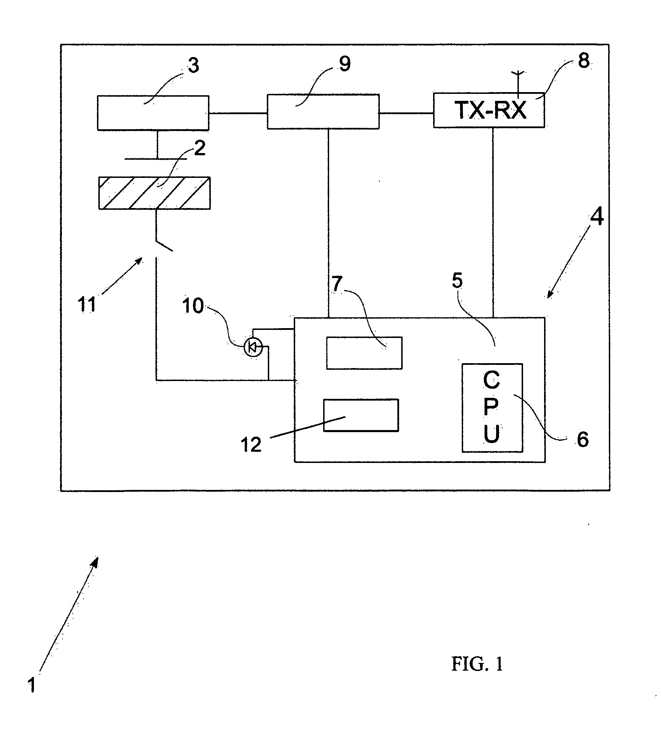

- figure 1 shows a block diagram of device capable of signalling a vehicle theft and the position of the vehicle according to this invention.

With reference to figure 1, the method according to this invention is based on the use of an antitheft device consisting, in its turn, of one box 1 containing one supply battery 2, an electronic signalling device consisting of one sensor of known type 3 capable of sensing shocks, tilts, vibrations, variations in temperature, noises or vibrations of a certain extent, concerning the vehicle and from the vehicle to the antitheft device itself and, as a result of it, capable of emitting a signal which is then transmitted to a vehicle locking system, which may also be represented by the immobiliser system already installed on many cars, and to a GSM transmission system, of the same kind as the one used by the cellular telephones, referred to, as a whole, as 4, which will send an SMS signal to at least one preset telephone number.

The said transmission system 4 includes a card 5 on which a microchip 6 and a non-volatile memories system, such as an EPROM or the like and a second memory module 7, are fitted.

The card 5 is connected to a transmitter/receiver 8 of the same kind as the one used by the cellular telephones.

The circuit may also include a timer 9 and one or more LEDs 10 signalling the activation of the circuit.

The owner's data, as well as any other information required for the identification of the vehicle such as number-plate, model, chassis number, etc. are stored into the non-volatile memory, for example into the EPROM 12, while the numbers to be contacted in case of report of theft and the text messages to be sent are stored into the second memory module 7.

The antitheft device can be activated by a switch 11 or by a codified signal, either an SMS message or a phone call coming from the owner's cellular telephone.

Once the antitheft device is activated by the switch 11 or by sending out from the cellular telephone a message with the activation code, and once the vehicle sensor is activated, in case the sensor 3 detects any anomaly (such as a shock, etc.), the microchip 6 receiving the message from the sensor, blocks the functioning of the engine by activating, for example, the immobiliser system, and sends out to the transmitter 8 one or more messages together with the data supplied by the second memory module 7 which are therefore sent to the preset telephone numbers.

A first message is sent out to the vehicle owner, to inform him/her of the theft attempt, while a second message is sent out to a control room with the request for tracing the position of the antitheft device and therefore the vehicle.

Afterwards, the said control room sends out further messages, for example one to the Police, Carabinieri or any other private Security Service, and one to the vehicle owner with the coordinates of the antitheft device position to start the searches.

The microchip 6 also activates the timer 9 to repeat the transmission at preset intervals, in such a way as to emit more signals and therefore enable the control room to dynamically define the position of the vehicle if it is moving.

The advantages deriving from the said method for the creation of an antitheft device are remarkable: the burglary attempt is communicated in real time and also in real time the position of the stolen vehicle is reported while the vehicle is moving, offering therefore both the owner and the police new possibilities of intervention.

The said antitheft device offers the additional advantage represented by the fact that it is included in one smail-sized box 1 (for example smaller than a cellular telephone) and, according to the particular need, it can be placed in any place of the vehicle, without any particular installation. By way of example, the said antitheft device may be represented by an accessory of the cellular telephone, which can be detached from its body and left on board of the vehicle where it switches on automatically.

The aforesaid advantages derive also from the fact that the transmission device provided for by this invention is a GSM-type, similar to the one used by the cellular telephones, utilising the network thereof and therefore all the characteristics of reception and position tracing.

A skilled in the art may make changes and different versions which must be considered included within the competence of this invention.

## Claims

1. Method for signalling theft attempts and the position of the vehicle **characterised by** the fact to provide for the following phases:
- detection, by a sensor connected to the vehicle, of an anomalous condition such as a movement or a vibration having an intensity higher than a preset value;
- emission of a corresponding signal;
- activation by the said signal of means capable of sending out an SMS message to one or more preset telephone numbers.

2. Method for signalling theft attempts and the position of a vehicle according to the claim 1, **characterised by** the fact to provide, at the same time of the sending out of the message, for the locking of the vehicle.

3. Method for signalling theft attempts and the position of a vehicle according to the claim 1, **characterised by** the fact to provide for the following phases:
- sending out of an SMS message to a control room connected to systems for tracing the position of the vehicle through the GSM network;
- verification by the control room of the position of the vehicle through the GSM system.

4. Method for signalling theft attempts and the position of a vehicle according to the claim 1, **characterised by** the fact to provide for a control room which verifies the position of the antitheft device utilising the GSM network.

5. Device for signalling theft attempts and the position of a vehicle by the method according to any of the previous claims, **characterised by** the fact to provide for:
- means capable of detecting an anomalous situation such as a movement, a vibration or a variation in temperature higher than a preset threshold value;
- means capable of emitting and sending out a corresponding signal to a GSM circuit capable of transmitting to a control station the local coordinates for the tracing of the said antitheft device;
- means capable of sending out an SMS message to one or more previously stored telephone numbers.

6. Device for signalling theft attempts and the position of the vehicle according to the claim 5 **characterised by** the fact to provide also for means capable of controlling the lock of the vehicle further to the detection of an anomalous situation.

7. Device for signalling theft attempts and the position of the vehicle according to the claim 6 **characterised by** the fact that the said means include a non-volatile memory in which the information concerning the vehicle, and one or more telephone numbers to which a message will be sent out, have been stored.

8. Device for signalling theft attempts and the position of the vehicle according to any of the previous claims 5 through 7, **characterised by** the fact to provide for timer-controlled means capable of cyclically repeating the sending out of the message for a preset number of times.

9. Device for signalling theft attempts and the position of the vehicle according to any of the previous claims 5 through 7, **characterised by** the fact to provide for a microchip capable of emitting, further to the receipt of the signal emitted by the sensor 3, a warning message and sending it out to one or more telephone numbers stored into the non-volatile memory.

10. Device for signalling theft attempts and the position of the vehicle according to any of the previous claims, **characterised by** the fact to provide for means capable of activating the device through a codified signal sent from a cellular telephone.

11. Device for signalling theft attempts and the position of the vehicle as described and shown.
